# EUROPEAN PATENT APPLICATION

(11) **EP 3 305 494 A1**
(43) Date of publication of application: **11.04.2018**
(21) Application number: 16799784.0
(22) Date of filing: 10.05.2016
(51) Int. Cl.: B29C 33/38, B21B 27/00, B22F 3/105, B22F 3/16, B29C 67/00, B33Y 10/00, B33Y 80/00

(54) **EMBOSSING-ROLL MANUFACTURING METHOD AND EMBOSSING ROLL**

(30) Priority: 28.05.2015 JP 2015108893
(71) Applicant: THINK LABORATORY CO., LTD., Kashiwa-shi, Chiba 277-8525 (JP)
(72) Inventor: SHIGETA, Tatsuo, Kashiwa-shi Chiba 277-8525 (JP)
(74) Representative: Mincone, Antimo
(86) International application number: PCT/JP2016/063807
(87) International publication number: WO 2016/190076

(57) **Abstract**

Provided are a manufacturing method for an embossing roll which is capable of being manufactured in a wide variety in small quantities and has uneven patterns formed uniformly and precisely without irregularities, and the embossing roll. The manufacturing method for the embossing roll comprises: a step of preparing a cylindrical base material; and a modeling step of modeling embossing onto a surface of the cylindrical base material with a three-dimensional printer based on three-dimensional processing data. It is preferred that the three-dimensional processing data is created by subjecting an embossing roll model to three-dimensional scanning.

## Description

### Technical Field

The present invention relates to an embossing roll, and more specifically, to a manufacturing method for an embossing roll having fine uneven patterns formed on a surface thereof and an embossing roll obtained by the manufacturing method.

### Background Art

As a roll having fine uneven patterns formed on a surface thereof, an embossing roll has hitherto been known. The embossing roll is used for subjecting various sheet-like articles to embossing and is also used for manufacturing electric and electronic products as well as building materials and daily commodities. For example, a thermoplastic resin film is subjected to embossing to manufacture electronic components, such as a prism sheet, a lenticular sheet, a Fresnel sheet, and an anti-reflection film to be used in a backlight for an LCD, a rear-projection screen, and the like, and a metal plate is subjected to embossing to enhance a design property thereof or to impart a sliding preventing function thereto. The applicant of the present application has proposed an embossing roll described in, for example, Patent Document 1.

In manufacturing of an embossing roll, in order to form fine uneven patterns on a surface of a cylindrical base material, engraving, electrocasting, sandblasting, electro-discharge machining, etching, or the like is performed.

Embossing rolls having the same uneven patterns may be manufactured in large quantity. Meanwhile, embossing rolls having various uneven patterns may be required to be manufactured, or embossing rolls having a wide variety of uneven patterns may be required to be manufactured in small quantities. The above-mentioned related-art manufacturing method for an embossing roll is suitable for large-scale manufacturing but is unsuitable for small-scale manufacturing of a wide variety of products.

Further, it is necessary that an uneven shape forming the uneven pattern be formed uniformly and precisely without irregularities. In manufacturing of electric and electronic products, in particular, preciseness is required.

### Prior Art Documents

### Patent Documents

Patent Document 1: JP 2009-72828 A
Patent Document 2: WO 2011/125926 A1
Patent Document 3: WO 2012/043515 A1

### Summary of the Invention

### Problems to be solved by the Invention

An object of the present invention is to provide a manufacturing method for an embossing roll which is capable of being manufactured in a wide variety in small quantities and has uneven patterns formed uniformly and precisely without irregularities, and the embossing roll.

### Means for Solving Problems

In order to solve the above-mentioned problems, a manufacturing method for an embossing roll according to the present invention comprises: a step of preparing a cylindrical base material; and a modeling step of modeling embossing onto a surface of the cylindrical base material with a three-dimensional printer based on three-dimensional processing data.

It is preferred that the three-dimensional processing data is created by subjecting an embossing roll model to three-dimensional scanning. As the embossing roll model, a model made of a synthetic resin, a metal, wood, plaster, or the like, which is produced in a size smaller than that of an embossing roll to be manufactured, may be used.

As the cylindrical base material, any of cylindrical base materials made of a metal and a synthetic resin is applicable.

As a material for the metal cylindrical base material, any known metal is applicable, but it is preferred that the metal cylindrical base material is made of at least one kind of material selected from the group consisting of Ni, stainless steel, brass, Fe, Cr, Zn, Sn, Ti, Cu, and Al. The metal cylindrical base material is made of at least one kind of material, and hence, needless to say, may be made of an alloy.

In the case of the metal cylindrical base material, it is preferred that the modeling step comprises sintering powder to be sintered laid on the surface of the cylindrical base material. As the powder to be sintered, any material capable of being sintered is applicable, but a metal or ceramics is preferred. More specifically, it is preferred that the powder to be sintered is made of at least one kind of material selected from the group consisting of, for example, Ni, stainless steel, brass, Fe, Cr, Zn, Sn, Ti, Cu, Al, Pt, In, Mg, W, Co, and ceramics. The powder to be sintered is made of at least one kind of material, and hence, needless to say, may be made of an alloy. Further, the ceramics include any inorganic substance that forms a sintered compact through sintering and also include carbides, such as tungsten carbide (WC) and silicon carbide (SiC), and nitrides, such as tungsten nitride and silicon nitride.

It is preferred that the powder to be sintered is sintered with a laser. As the laser, a known laser is applicable.

As a material for the synthetic resin cylindrical base material, any known synthetic resin is applicable. However, it is preferred that the synthetic resin cylindrical base material is made of at least one kind of synthetic resin material selected from the group consisting of, for example, a hard plastic, an engineering plastic, an ABS resin, an epoxy resin, a fiber-reinforced plastic (FRP), and a carbon fiber-reinforced plastic (CFRP).

In the case of the synthetic resin cylindrical base material, it is preferred that the modeling step is performed by a fused deposition modeling system, a stereo lithography system, an ink-jet system, or the like.

The fused deposition modeling system is a method involving discharging a thermoplastic synthetic resin, for example, an ABS resin or a polylactic acid resin, onto a surface of a base material with a printer head to repeat lamination, to thereby perform modeling.

The stereo lithography system is a method involving irradiating a UV-curable resin with a UV-laser to repeat lamination, to thereby perform modeling.

The ink-jet system is a method involving jetting a UV-curable synthetic resin having a fine particle shape with an ink-jet head and curing the UV-curable synthetic resin by irradiation with UV-rays to repeat lamination, to thereby perform modeling.

It is preferred that the step of preparing the cylindrical base material and the modeling step are performed with a fully automatic laser plate-making system. As the fully automatic laser plate-making system, it is possible to use, for example, a fully automatic laser plate-making system in which a three-dimensional printer processing unit is incorporated into a fully automatic gravure plate-making processing system described in Patent Document 2 or Patent Document 3. Further, it is preferred that a three-dimensional scanner processing unit capable of performing three-dimensional scanning is further incorporated into such fully automatic laser plate-making system.

An embossing roll according to the present invention is manufactured by the said manufacturing method for an embossing roll.

### Advantageous Effects of the Invention

According to the present invention, the following remarkable effect is exhibited: the manufacturing method for an embossing roll which is capable of being manufactured in a wide variety in small quantities and has uneven patterns formed uniformly and precisely without irregularities, and the embossing roll can be provided.

### Brief Description of Drawings

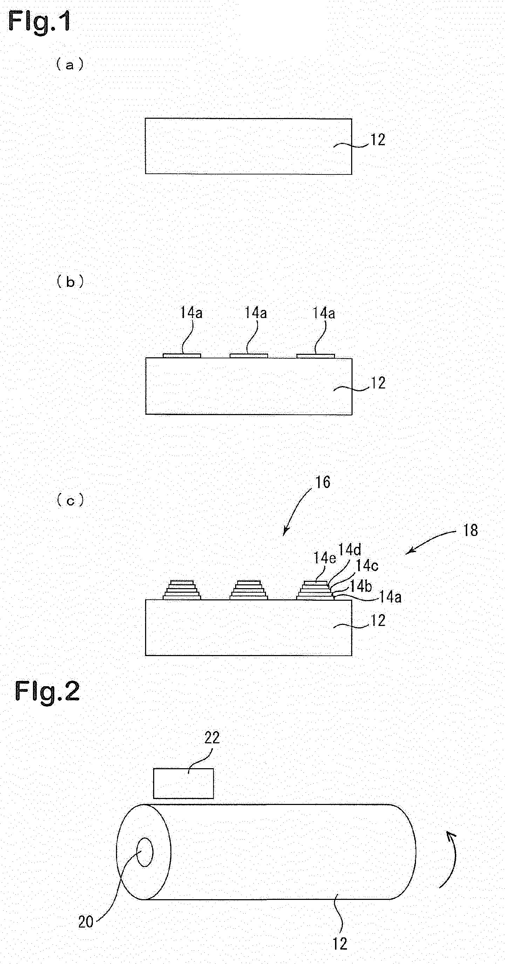

FIG. 1 is each an explanatory view for schematically illustrating one embodiment of a manufacturing method for an embossing roll according to the present invention. FIG. 1(a) is a schematic relevant part sectional view for illustrating a state in which a cylindrical base material is prepared. FIG. 1(b) is a schematic relevant part sectional view for illustrating a state in which a first layer of uneven patterns is formed on a surface of the cylindrical base material. FIG. 1(c) is a schematic relevant part sectional view for illustrating a state in which a plurality of layers of the uneven patterns are laminated.
FIG. 2 is an explanatory view for schematically illustrating a modeling step of the manufacturing method for an embossing roll of the present invention.
FIG. 3 is a schematic view for illustrating an embossing roll manufactured by the manufacturing method for an embossing roll of the present invention.

### Modes for Carrying out the Invention

Embodiments of the present invention are described below, but those embodiments are described as examples, and hence it is understood that various modifications may be made thereto without departing from the technical spirit of the present invention. The same members are represented by the same reference symbols.

As illustrated in FIG. 1(a), first, a cylindrical base material 12 made of a metal or a synthetic resin is prepared. Then, embossing is modeled onto a surface of the cylindrical base material with a three-dimensional printer based on three-dimensional processing data (modeling step).

The three-dimensional processing data is created by subjecting an embossing roll model to three-dimensional scanning. Further, three-dimensional processing data obtained in advance may also be used.

Then, as illustrated in FIG. 1(b), a first layer 14a of uneven patterns is formed. In the case of a metal cylindrical base material, the first layer 14a is formed by sintering powder to be sintered laid on the surface of the cylindrical base material. Further, in the case of a synthetic resin cylindrical base material, the first layer 14a is formed by a fused deposition modeling system, a stereo lithography system, an ink-jet system, or the like.

Then, the formation of the layer illustrated in FIG. 1(b) is repeated to provide a state in which a plurality of layers 14a to 14e are laminated as illustrated in FIG. 1(c). Thus, an embossing roll 18 having fine uneven patterns 16 formed on a surface thereof is manufactured.

The modeling step may be performed as follows. As illustrated in FIG. 2, a chuck cone (not shown) is inserted into an opening 20 of the cylindrical base material 12, and the modeling step is performed while the cylindrical base material 12 is rotated. Reference symbol 22 denotes a known three-dimensional printer. With this, the modeling step can be performed through use of the known three-dimensional printer 22. Further, it is also possible to obtain a processing unit having a configuration in which the modeling step is performed through use of the known three-dimensional printer 22 while the cylindrical base material 12 is rotated as described above.

A three-dimensional printer processing unit can be used by being incorporated into a fully automatic laser plate-making system.

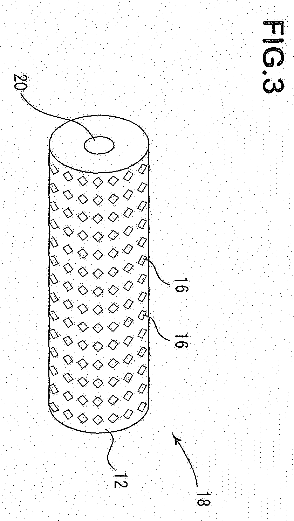

The embossing roll 18 manufactured as described above is illustrated in FIG. 3. In the manufacturing method for the embossing roll 18 of the present invention, it is possible to form the uneven patterns 16 having a size up to about 10 µm on one side.

### Examples

The present invention is hereinafter described in more detail with Examples, but it is needless to say that Examples are only illustrative and not intended to be interpreted in a limited way.

### (Example 1)

A hollow roll made of iron having a circumference of 600 mm, a surface length of 1,100 mm, and a thickness of 10 mm was prepared as a cylindrical base material, and an embossing roll was manufactured through use of NewFX (fully automatic laser plate-making system manufactured by Think Laboratory Co., Ltd.). A three-dimensional printer processing unit of a type of sintering powder to be sintered was incorporated as a processing unit into the fully automatic laser plate-making system. As three-dimensional processing data, data obtained by subjecting an embossing roll model to three-dimensional scanning in advance was used.

Powder to be sintered (metal powder that corresponds to die steel SKD11 when sintered) laid on a surface of the hollow roll was sintered with a fiber laser to form a layer. Then, the formation of the layer was repeated to laminate a plurality of layers. Thus, an embossing roll having fine uneven patterns formed on a surface thereof was obtained.

### (Example 2)

A hollow roll made of CFRP having a circumference of 600 mm, a surface length of 1,100 mm, and a thickness of 10 mm was prepared as a cylindrical base material, and an embossing roll was manufactured through use of NewFX (fully automatic laser plate-making system manufactured by Think Laboratory Co., Ltd.). A three-dimensional printer processing unit of a fused deposition modeling system type was incorporated as a processing unit into the fully automatic laser plate-making system. As three-dimensional processing data, data obtained by subjecting an embossing roll model to three-dimensional scanning in advance was used.

A thermoplastic synthetic resin (ABS resin) was discharged onto a surface of the hollow roll with a printer head to form a layer. Then, the formation of the layer was repeated to laminate a plurality of layers. Thus, an embossing roll having fine uneven patterns formed on a surface thereof was obtained.

### Reference Signs List

12: cylindrical base material, 14a to 14e: layer, 16: uneven pattern, 18: embossing roll, 20: opening, 22: three-dimensional printer.

## Claims

1. A manufacturing method for an embossing roll, comprising:
a step of preparing a cylindrical base material; and
a modeling step of modeling embossing onto a surface of the cylindrical base material with a three-dimensional printer based on three-dimensional processing data.

2. A manufacturing method for an embossing roll according to claim 1, wherein the three-dimensional processing data is created by subjecting an embossing roll model to three-dimensional scanning.

3. A manufacturing method for an embossing roll according to claim 1 or 2, wherein the modeling step comprises sintering powder to be sintered laid on the surface of the cylindrical base material.

4. A manufacturing method for an embossing roll according to claim 3, wherein the powder to be sintered is sintered with a laser.

5. A manufacturing method for an embossing roll according to any one of claims 1 to 4, wherein the step of preparing the cylindrical base material and the modeling step are performed with a fully automatic laser plate-making system.

6. An embossing roll, which is manufactured by the manufacturing method for an embossing roll of any one of claims 1 to 5.
